# EUROPEAN PATENT APPLICATION

(11) **EP 1 313 161 A1**
(43) Date of publication of application: **21.05.2003**
(21) Application number: 01127101.2
(22) Date of filing: 15.11.2001
(51) Int. Cl.: H01M 8/04

(54) **Fuel cell system and method for operating the same**

(71) Applicant: Ballard Power Systems AG, 73230 Kirchheim / Teck-Nabern (DE); BALLARD POWER SYSTEMS INC., Burnaby, British Columbia V5J 5J9 (CA)
(72) Inventor: Schmidt, Gerhard, Delta, BC, Canada V4M 2X9 (CA); Mulvenna, Alan, North Vancouver, BC, Canada V7N 2S2 (CA); Matthews, Derek, Burnaby, BC, Canada V5J 5G1 (CA); Peters, Ed, Surrey, BC, Canada V4P 3G7 (CA)
(74) Representative: Beyer, Andreas, Dr.

(57) **Abstract**

A fuel cell system comprising a fuel cell (2) exhibiting an anode (2.1) with a fuel feed line (3) to feed fuel to the anode and an anode exhaust line (4) for removing anode exhaust from the anode and a cathode (2.2) with an oxygen feed line (5) to feed oxygen to the cathode and a cathode exhaust line (6) to remove cathode exhaust from the cathode, a water collecting unit (9) for extracting water from the fuel cell exhaust, and a cooling circuit (10) for cooling the fuel cell, the cooling circuit employing a radiator (13), whereby a nozzle (12) is employed for spraying water onto said radiator whereby the nozzle is connected to said water collecting unit.

## Description

The invention relates to a fuel cell system and a method for operating the same in accordance with the preamble of the independent claims.

During operation of a fuel cell system water and heat is produced by reacting hydrogen and oxygen in the fuel cell stack. In fuel cell systems equipped with polymer membrane fuel cells (PEM fuel cells) the operation temperature is rather low, usually below 100°C. The cooling of the fuel cell stack is performed by removing heat via a radiator emitting heat to the ambient. Such a fuel cell system with a radiator is disclosed in DE 43 27 261 C1. The cooling efficiency is depending on the ambient temperature and requires a large size of the radiator.

The invention is based on the object of specifying a fuel cell system where the cooling performance of the fuel cell is enhanced and the system runs on a radiator of smaller size.

This object is achieved in the case of a fuel cell system having the features of Claim 1 and in the case of a method having the features of Claim 6.

The invention allows for a reduction in size of the radiator and a more efficient cooling of the fuel cell system by making use of surplus product water of the fuel cell system.

Further advantages and refinements of the invention emerge from the rest of the claims and the description.

The invention is explained in more detail below with reference to a drawing with a single figure, in which:

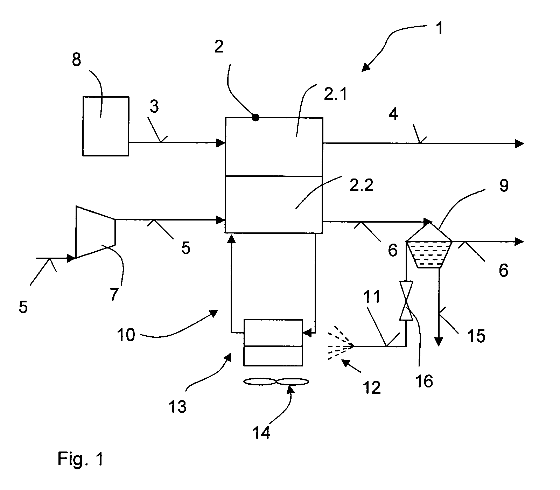

- Figure 1: shows a schematic sketch of an embodiment of a preferred fuel cell system according to the invention.

The invention can be advantageously used in vehicles where a fuel cell system is used to supply electric energy for traction and/or low power requirements. The invention is highly favourable for hydrogen fuel cell systems. It can also be applied, however, to fuel cell systems with a gas production system where hydrogen is produced from a fuel, e.g. by a reforming process.

In fuel cell systems equipped with polymer membrane fuel cells (PEM fuel cells) the product water formed during operation of the fuel cell is collected in a condenser or a gas/liquid separator in the fuel cell exhaust line and recycled to the fuel cell system. Thus the water is available for humidification of the fuel cell process gases and for water-steam reforming reactions in a gas production system in reformer type fuel cell systems. However, when the water tank of the condenser or a gas/liquid separator is full, water has to be dumped on the road.

Fig. 1 shows a preferred embodiment of a fuel cell system 1 according to the invention as a schematic drawing. The fuel cell system 1 comprises a fuel cell 2, preferably a fuel cell stack, where a multiplicity of single fuel cells are stacked together to be capable of producing a desired amount of electric power. The fuel cell 2 exhibits an anode 2.1 with an anode feed line 3 for feeding hydrogen to the fuel cell anode 2.1 and an anode exhaust line 4 to remove the exhaust from the anode 2.1 and a cathode 2.2 with a cathode feed line 5 for feeding oxygen to the fuel cell cathode 2.2 and a cathode exhaust line 6 to remove the exhaust from the cathode 2.2. The anode exhaust mainly carries away surplus hydrogen and water from the fuel cell 2.

The oxygen for the fuel cell cathode 2.2 is preferably from air which is fed to a compressor 7 by line 5 and compressed by said compressor 7 to an appropriate operating pressure.

The fuel cell system 1 can be run with hydrogen as fuel or comprise a gas production system 8 where hydrogen is formed by reacting a fuel in the gas production system 8. Suitable fuels are carbon hydrates or hydrogen compounds such as alcohol, ether, ester and other suitable compounds.

Preferably, air is used for supplying the cathode 2.2 with oxygen. Air compression is performed by a compressor 9 arranged in the cathode feed line 5 to provide air with a desired high pressure for fuel cell operation.

According to the invention a water collecting unit 9 such as a condenser and/or a gas/liquid separator is arranged in the cathode exhaust line 6. The cathode exhaust usually carries away most of the product water formed during fuel cell operation. As known in the art, water extracted from the fuel cell exhaust can be recycled into the fuel cell system 1 via line 15 for humidification purposes of process gases and/or chemical reactions in the gas production system 8 if necessary. Additionally, a water collecting unit 9 can also be installed in the anode exhaust line 4.

Cooling of the fuel cell 2 is performed by employing a cooling circuit 10 which connects the fuel cell 2 to a radiator 13. The radiator 13 can be cooled by a fan 14.

According to the invention, water from the water collecting unit 9 can guided via line 11 to the radiator 13 and sprayed by employing a nozzle 12 onto the radiator 13 thus enhancing the cooling efficiency of the radiator 13 by making use of the heat of evaporation. As the water evaporates after being sprayed onto the radiator 13 much more heat is extracted from the radiator 13.

Favourably, water is taken from the water collecting unit 9 if the water level is high. Most favourable, water is only supplied to the radiator 13 if the there is surplus water available in the water collecting unit 9. Advantageously, water is only supplied if more water is available in the fuel cell exhaust than can be collected in the water collecting unit 9. A vent 16 can be arranged upstream the nozzle 12 which opens when surplus water is available and closes when no water shall be sprayed onto the radiator 13.

In a preferred embodiment of the invention a water level sensor is arranged in the water collecting unit 9. Additionally, a control unit can be employed on behalf of which the vent 16 can be opened or closed according to the water level read by the water level sensor. The water level indicative for the availability of surplus water in the water collecting unit 9 for spraying onto the radiator 13 can be adjusted to the load of the fuel cell 2.

In another embodiment of the invention, the spraying procedure is dependent on the load of the cooling circuit 10 of the fuel cell 2. This is very advantageous if the ambient temperature rises to higher temperatures thus reducing the radiator efficiency due to a low temperature difference between ambient and fuel cell temperature.

The radiator 13 performs better than running on dry air thus allowing for a reduction in size of the radiator 13. The heat transfer characteristics from the radiator 13 to the ambient is improved. As the water used for the spraying procedure is available in the fuel cell system 1 the invention can employed without much extra effort.

In very low ambient conditions the spray can be shut off to prevent freezing on the radiator 13.

## Claims

1. A fuel cell system (1) comprising a fuel cell (2) exhibiting an anode (2.1) with a fuel feed line (3) to feed fuel to the anode (2.1) and an anode exhaust line (4) for removing anode exhaust from the anode (2.1) and a cathode (2.2) with an oxygen feed line (5) to feed oxygen to the cathode (2.2) and a cathode exhaust line (6) to remove cathode exhaust from the cathode (2.2), a water collecting unit (8) for extracting water from the fuel cell exhaust, and a cooling circuit (10) for cooling the fuel cell (1), the cooling circuit (10) employing a radiator (13),
**characterized in**
**that** a nozzle (12) is employed for spraying water onto said radiator (13) whereby the nozzle is connected to said water collecting unit (8).

2. A fuel cell system according to Claim 1,
**characterized in that** a water level sensor is employed the read the water level in the water collecting unit (8).

3. A fuel cell system according to Claim 2,
**characterized in that** a control unit is electrically connected to said water level sensor.

4. A fuel cell system according to Claim 1,
**characterized in that** a water collecting unit (8) is installed in the anode exhaust.

5. A method for operating a fuel cell system where a fuel is fed to an anode (2.1) of a fuel cell (2) and oxygen is fed to a cathode (2.2) of said fuel cell (2) and product water is removed from the fuel cell exhaust by a water collecting unit (9) and the fuel cell (1) is cooled on behalf of a cooling circuit (10) employing a radiator (13),
**characterized in that** water from the water collecting unit (9) is sprayed onto said radiator (13).

6. A method according to Claim 5,
**characterized in that** surplus water is used for spraying onto the radiator (13).

7. A method according to Claim 5,
**characterized in that** said water is sprayed onto the radiator (13) in dependence of the water level in the water collecting unit (9).

8. A method according to Claim 7,
**characterized in that** said water is sprayed onto the radiator (13) in dependence of the load of the fuel cell system (1).

9. A method according to Claim 5,
**characterized in that** said water is sprayed onto the radiator (13) in dependence of the load of the cooling circuit (10).
